# EUROPEAN PATENT SPECIFICATION

(11) **EP 4 349 603 B1**
(45) Date of publication and mention of the grant of the patent: **03.12.2025**
(21) Application number: 22199414.8
(22) Date of filing: 03.10.2022
(51) Int. Cl.: G06K 15/02, B41J 2/155, B41J 2/205, B41J 2/21

(54) **METHOD FOR IMPROVING THE CONSISTENCY OF THE COLOR DENSITY OVER A PRINTING WIDTH AND INKJET PRINTER**
VERFAHREN ZUR VERBESSERUNG DER GLEICHMÄSSIGKEIT DER FARBDICHTE ÜBER EINE DRUCKBREITE UND TINTENSTRAHLDRUCKER
MÉTHODE POUR AMÉLIORER LA CONSTANCE DE LA DENSITÉ DES COULEURS SUR UNE LARGEUR D'IMPRESSION ET IMPRIMANTE À JET D'ENCRE

(43) Date of publication of application: 10.04.2024
(73) Proprietor: BOBST MEX SA, 1031 Mex (CH)
(72) Inventor: BERCLAZ, Paul, 2037 Montmollin (CH); RICHARD, Matthieu, 25160 Remoray (FR); HOFMANN, Thomas, 1201 Genève (CH)
(74) Representative: Hasler, David

(56) References cited:
- US-A1- 2005 212 832
- US-A1- 2009 028 585
- US-A1- 2014 002 536
- US-A1- 2018 264 841

## Description

The invention relates a method for improving the consistency of the color density over the printing width of an inkjet printer. Furthermore, the invention relates to an inkjet printer.

Inkjet printers are typically applied to digitally print various products, such as labels, textiles, ceramic tiles and many more, by dispensing small ink droplets through nozzles of a printing head.

In order to achieve consistent and high-quality prints, a precise control of the drop ejection from each nozzle is necessary. Even small variations of ink flow velocity, ink temperature or ink pressure will impact the formation process of drops and may cause a nozzle to behave differently than its neighbors . Resulting variations of droplet volume, shape, direction or velocity across a printing head or plurality of printing heads may affect the printing pattern, in particular the consistency of the ink density printed onto a substrate and consequently the color density in multicolor inkjet printing.

US 2009/028585 A1 discloses a method for improving the print quality of a pagewide printing array that is made of several inkjet dice positioned end-to-end at array seams. The method comprises the steps of printing multiple test-pattern cards having correction patterns for each seam and inspecting the cards by a human operator to identify the best results for entering into a program for controlling and improving the printing.

US 2014002536A1 discloses a conventional inkjet printer comprising printing heads, a camera and a control unit.

The object of the invention is to improve the print quality by compensating for deviations of the drop formation process across the printing width.

The object of the invention is reached with a method which improves the consistency of the color density over the printing width of an inkjet printer, method comprising the following steps:
- Printing a 2-dimensional pattern, wherein the 2-dimensional pattern has the same nominal print density over a printing width and varying nominal print densities in printing direction;
- Dividing the 2-dimensional pattern in multiple columns across the printing width;
- Recording with a camera at least one color value for each nominal print density in each of the columns;
- Deriving a correction curve for each column from the recorded color values; and
- Correcting printing signals and/or printing patterns with the correction curves.

The method can be applied to piezoelectric inkjet printers as well as other drop-on-demand type printing machines with single or multiple print heads. It is for example applicable to improve the print quality of single pass inkjet printers with multiple print stations which are subsequently passed by a web and/or substrate and which are configured to print multiple inks, in particular multiple colors, onto the web and/or substrate.

For a piezoelectric inkjet printer, the step of correcting the printing signals can involve adjustment of voltage pulse amplitudes, durations and/or shapes applied at the print head piezo elements of a single printing nozzle or set of printing nozzles. This adjustment allows to locally increase or decrease the droplet volume, shape and velocity. In practice, the voltage pulse amplitudes and shapes are often set at the print head level, and the timing and duration are set for each nozzle.

It is thus possible to influence the drop formation process of individual printing nozzles or sets of printing nozzles and thus to homogenize the drop formation process across the print width.

Furthermore, all steps of the method can be performed inline during printing without any user intervention. Hence, the method is time and cost saving and less prone to error compared to manual adjustments.

In an embodiment, the method can comprise the additional step of printing a position calibration pattern suitable to correlate a printing nozzle or group of printing nozzles with a column printed from the printing nozzle or group of printing nozzles.

The calibration pattern can be recorded with a camera to gain position data. It is conceivable that the same camera that records the color values is applied for this purpose. Alternatively, an additional calibration camera configured to record calibration patterns can be used.

Because the substrate-to-camera distance may vary across the print width, it is preferable to print and record calibration pattern markings at least every 5 mm to 10 mm, more preferably every 0.3 mm to 2 mm. In particular, the calibration pattern can consist of small parallel lines forming a periodical pattern across the print width.

The printing and recording of the calibration pattern allows to determine the position of the nozzles from which the pattern was ejected and consequently also the position of all other nozzles relative to the substrate. It is thus possible to prevent false assignment of the printing nozzles or printing nozzle groups with the columns into which the print pattern is divided.

In another embodiment, the correction curve for each column is derived from a comparison between the recorded color values and the corresponding nominal print density. It is conceivable that the nominal print density describes the intended ink coverage on a substrate and that the printing signals for printing the 2-dimensional pattern are applied to the nozzles in accordance with the nominal print density. In other words, the nominal print density contains information on how much ink should be at a certain position on the substrate. A comparison between this intended value and the real value recorded with the camera allows to determine the deviation between the two and thus to find suitable correction means to compensate for this deviation.

In an embodiment, the camera records red, green and blue (RGB) color values for each nominal print density in each of the columns. The correction curves for each of the columns are then derived from one of the RGB color values or a linear combination of the RGB color values, for example their sum.

For example, if a 2-dimensional pattern is printed with the first ink (e.g. magenta ink) of a multicolor inkjet printer, the camera can record the RGB color values for the magenta print pattern. However, only a single color is necessary to derive a correction curve. It is thus possible to only use the green color values recorded by the camera and to disregard the red and the blue color values. Alternatively, any linear combination of the RGB color values (α*R+β*G+γ*B), for example their sum (α=β=γ=1), can be used to derive a correction curve for each column of the print pattern. Depending on the application, certain linear combinations of the RGB values might offer higher reproducibility of the method than others. It is thus conceivable that the factors of the linear combination are chosen in dependence of the application, in particular the applied ink type and substrate. Nevertheless, the method is also applicable using a greyscale - single channel - camera.

In a further embodiment, each of the columns into which the printed pattern is divided corresponds to an individually addressable group of printing nozzles, in particular 16 nozzles of a printing head. It is conceivable that a printing head comprises a plurality of such groups, in particular 128.

Dividing the nozzles into groups and correcting the printing signals for each group reduces the computational effort of the method compared to single nozzle correction. Furthermore, the precision and pixel size of the camera as well as the print head drive electronics might limit the possibility for single nozzle correction.

It is furthermore conceivable that the nominal print density describes an intended ink coverage on a substrate from 0 % to 100 %.

Preferably, the 2-dimensional pattern is printed by subsequently applying ink with discrete nominal print densities onto a web and/or substrate. The nominal print densities may be between 0 % and 100 % with steps of 2.33 %. This corresponds to 44 nominal print densities in every column of the print pattern. It was found out that such division results in high quality of a corrected printing process with reasonable computational effort. Of course, depending on the application, it is also possible to choose a finer or coarser subdivision of the nominal print density range.

In a further embodiment, the steps of the method are repeated periodically and/or when a printing parameter, in particular the printing speed, or ink batch, or the ambient temperature, or humidity is changed. By repeating the method, high print quality can be achieved across various printing processes. In addition, connecting the execution of the method to special events, such as an ink batch change, reduces the overall effort.

In a further variant of the method, the 2-dimensional pattern is printed on a substrate used for production. This also reduces the overall effort of the method (additional calibration substrates are not necessary) and allows compensating for substrate specific effects, such as ink spreading and/or soaking (for example on porous cardboard substrates).

The object of the invention is also solved by an inkjet printer comprising at least one printing head provided with a plurality of nozzles and adapted to print an ink; a camera located downstream of the at least one printing head and adapted to record at least one color value of a pattern printed from the ink over the whole print width of the at least one printing head; and a control unit configured to execute a method according to the invention.

The advantages that were discussed for the method also apply to the inkjet printer.

In one embodiment, the inkjet printer camera has three lines of pixels in printing direction. Each line is adapted to record different colors, in particular red, green and blue (RGB) color values of the 2-dimensional print pattern over the whole printing width.

Compared to using several conventional cameras in parallel, the use of a single three line camera is less prone to error and/or reduces the computational effort the method as well setup costs.

Furthermore, using such in-line camera allows for periodic recalibration without any user intervention. It is also possible to record several samples having the same nominal print density to average out and/or compensate for local substrate defects or waviness.

Please note that this method is applied at a density level in the chain of processes that control the print nozzles. Thus, a printing pattern contains numerical values that are further processed by a dithering algorithm to obtain the signal input to each individual printing nozzle. Nevertheless, we define a density value for each nozzle and thus, the dithering algorithm can be considered as a stochastic quantization of the density value. In other words, for the sake of this disclosure, we can consider that each nozzle gets a density value as input, and ignore the fact that this value is processed further by said dithering algorithm.

Further advantages and features will become apparent from the following description of the invention and from the appended figures which show a nonlimiting exemplary embodiment of the invention and in which:
- Fig. 1 schematically shows a top view of an inkjet printer according to the invention; and
- Fig. 2 schematically shows a graphic illustration of correction curves for several columns of a print pattern.

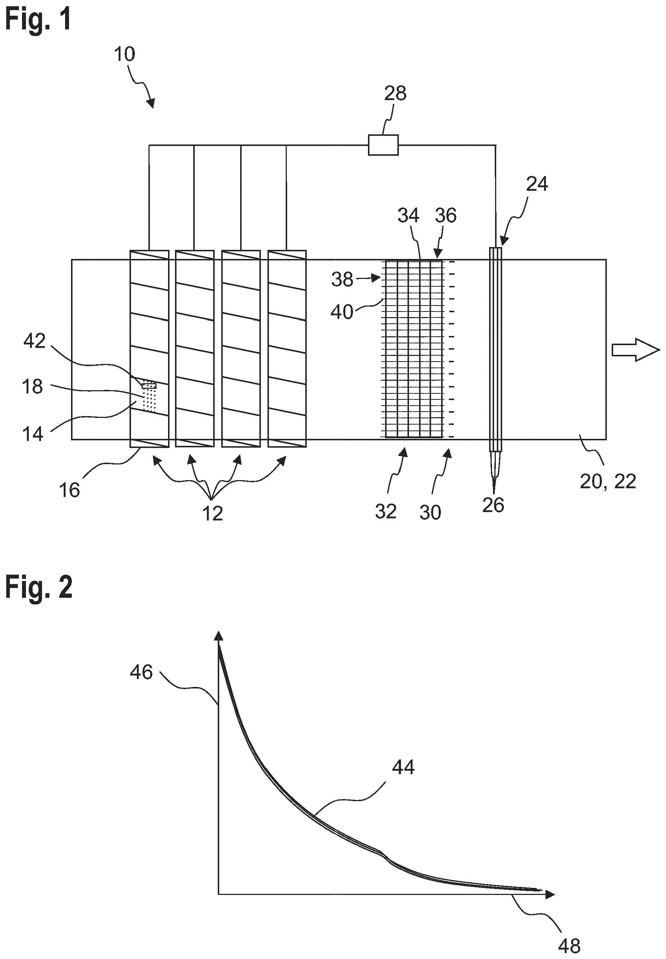

Fig. 1 schematically shows an embodiment of a single pass inkjet printer 10 with four printing stations 12. Each printing station 12 is configured to print a different ink, for example cyan, magenta, yellow and black ink.

In the described embodiment, each printing station 12 is equipped with six piezoelectric inkjet printing heads 14 which are assembled in a print bar 16. The length of the print bars 16 defines the print width of the inkjet printer 10.

Each of the printing heads 14 comprises a plurality of nozzles 18. In the shown embodiment, the printing heads 14 are Dimatix Samba printing heads with multiple printing nozzles 18 arranged on a trapezoidal nozzle plate. In Figure 1, the nozzles 18 are only schematically shown for one of the printing heads 14. Of course, also other printing heads 14 with different amounts of nozzles 18 and different shapes can be used.

The inkjet printer 10 further comprises a web 20 for carrying print substrates 22, for example polymer foils or carton for packaging. In figure 1, the movement direction of the web 20 relative to the print stations 12 is indicated with an arrow.

The inkjet printer 10 is further equipped with a camera 24 which is located downstream of the print stations 12, in particular downstream of the print bar 16 to be analyzed. The camera 24 has three lines of pixels 26 in printing direction. Each pixel line 26 extends across the whole print width and is adapted to record a different color of a printed pattern. In particular, one of the pixel lines 26 is configured to record red color values R, one of the pixel lines 26 is configured to record green color values G and one of the pixel lines 26 is configured to record blue color values B. Hence, it is possible to record red, green and blue (RGB) color values of printed patterns across the whole print width with the camera 24.

Preferably, there is a single camera for analyzing multiple print bars 16 of the printing station 12. Nevertheless, in systems where the ink is dried in-between print bar 16, i.e., where the distance between print bars is large, we may place a camera 24 downstream of each print bar 16.

The inkjet printer 10 further comprises a control unit 28 configured to run a program that causes the control unit 28 to perform a method for improving the consistency of the color density over the printing width.

In a first step of the method, one of the print stations 12, for example the cyan print station 12, prints a calibration pattern 30 onto a print substrate 22 that is used for production, for example onto a paper, plastic foil or cardboard. In the embodiment, the calibration pattern 30 comprises a plurality of straight lines elongating in printing direction. The lines are parallel and 1 mm spaced apart from each other. Of course, the given example is not limiting. It is also possible to use other calibration patterns 30 and/or line distances. Preferably, the distances are chosen such that the resulting positioning precision is finer than the pixels resolution (i.e. the resulting positioning uncertainty is smaller than the distance between two adjacent pixels measured at the print substrate's).

In a second step of the method, the same print station 12 prints a 2-dimensional pattern 32 onto the substrate 22. The 2-dimensional pattern 32 is schematically shown in figure 1. It has the same nominal print density over the printing width and varying nominal print densities in printing direction.

In the embodiment, the nominal print density describes the intended ink coverage on the substrate 22 from 0 % to 100 %.

The 2-dimensional pattern 32 is created by subsequently applying ink with 44 discrete nominal print densities onto the substrate 22, the densities starting with 0 % and ending with 100 % with steps of 2.33 % in between.

In the figure, boarders between areas of different nominal print densities are indicated by parallel lines 34 perpendicular to the print direction. To simplify the drawing, only five areas 36 with discrete print density are shown.

In the embodiment, the area 36 with the highest nominal print density corresponds to a cyan ink coverage on the substrate 22 of 100 % and is located next to the calibration pattern 30.

In a third step of the method, the 2-dimensional pattern 32 is divided into multiple columns 38 across the print width. It is conceivable that the columns 38 are equally in size. The size can for example be defined by fixed values stored in the control unit 28 and/or program. Alternatively, the size of the columns 38 can be dependent on the print width and/or resolution of the printing heads 14. In figure 1, the columns 38 are indicated by dashed lines 40 elongating in web direction.

In the embodiment, each of the columns 38 is printed by an individually addressable group 42 of sixteen printing nozzles 18 of a printing head 14. Each printing head 14 comprises 128 such groups 42. In figure 1, a simplified schematic illustration of a group 42 is shown for one of the printing heads 14. The group 42 of nozzles 18 is configured to print ink on a width of 0.33 mm. Hence, the width of the columns 38 is also 0.33 mm.

After printing, the substrate 22 with the calibration pattern 30 as well as the 2-dimensional pattern 32 passes the camera 24.

In a fourth step, the camera 24 records the calibration pattern 30 as well as red, green and blue (RGB) color values for each nominal print density in each of the columns 38 of the 2-dimensional pattern 32. This results in 44x3 recorded discrete color values per column 38.

By analyzing the record of the calibration pattern 30, it is found out which part of the 2-dimensional pattern 32 was printed with which group 42 of nozzles 18. In particular, the recording of the calibration pattern 30 allows correlating the columns 38 with the groups 42 of printing nozzles 18 with which the respective columns 38 were printed.

In a fifth step of the method, the control unit 28 derives correction curves 44 for each column 38 from the recorded color values.

The correction curves 44 may be derived from a single recorded color (for example the green color values recorded by the corresponding pixel line 26 of the camera 24).

In the embodiment, the cyan print pattern 32 results in a clear camera signal of the red camera channel. Hence, it is sufficient to use the red color values to calculate the correction curves 44. The green and blue color values recorded by the camera 24 are disregarded in the described example.

Of course, for other printed inks and/or applications, the green and/or blue recorded color values or a linear combination of the RGB color values (α*R+β*G+γ*B) could be used to calculate correction curves 44. For example, for a given ink, we can take (α,β,γ) to be equal to the component-wise absolute difference between the RGB0 reading of the substrate with no ink coverage and the RGB100 reading of a color patch with full ink coverage (i.e., α = | R0-R100 |, β = | G0-G100 |, γ = | B0-B100 |). We may preferably normalize the values of the (α,β,γ) vector so that its Euclidian norm is equal to one. This example has the advantage to emphasize the color component that carries most of the information and reduce the color component that would only bring noise to the computation.

In general, by *recorded color* or *color value,* we mean a channel of the camera used to record the print. It may also be the (only) channel of a monochrome camera, or a mathematical combination of the channels of a multispectral device.

In the described example, the correction curves 44 are derived by creating interpolations of the 44 recorded red color values of each column 38.

Figure 2 schematically shows the interpolated red color values (camera red channel signal [a.U.]) on the y-axis 46 over the nominal print density (ink coverage [%]) on the x-axis 48.

Regarding figure 2, it is desirable to achieve high congruency between the depicted curves 44, because this will ensure a uniform color density. Hence, the interpolated red color values may serve as correction curves 44. Alternatively, correction curves 44 may be derived from a comparison of the interpolated red color values of the different columns 38.In another variant, the correction curves 44 may be obtained from a comparison between the recorded color values and the corresponding nominal print densities.

To use curve 44 as a correction curve, for each desired output (vertical axis), the correction consists of finding the related input value on the X axis. In practice, we build a lookup table for each correction curve.

In other words, for each of the 44 print density areas 36 in each column 38, the nominal print density (intended ink coverage) is compared with the recorded color value that correlates with the actual ink coverage. In a sixth step, the printing signals are corrected with the correction curves 44. In the embodiment, the correction involves a change of the voltage pulses applied to the piezo elements of the printing nozzle groups 42, such that the amount of cyan ink ejected from each nozzle group 42 is homogenized across the printing width. In other words, ink output disparities between the groups 42 of nozzles 18 are corrected.

After improving the consistency of the color density for the cyan ink, the method can be repeated for the magenta, yellow and black ink.

It is furthermore conceivable that the aforementioned steps one to six are repeated for the same ink on a frequent basis to ensure high print quality over extended printing applications.

Alternatively or additionally, the steps can be repeated when a printing parameter, for example a printing speed or ink batch, or the ambient temperature or humidity changes.

## Claims

1. Method for improving the consistency of the color density over the printing width of an inkjet printer (10) comprising the steps of:
- Printing a 2-dimensional pattern (32), wherein the 2-dimensional pattern (32) has the same nominal print density over a printing width and varying nominal print densities in printing direction;
- Dividing the 2-dimensional pattern (32) in multiple columns (38) across the printing width;
**characterized in that** the method further comprises the steps of:
- Recording with a camera (24) at least one color value for each nominal print density in each of the columns (38);
- Deriving a correction curve (44) for each column (38) from the recorded color values; and
- Correcting printing signals and/or printing patterns with the correction curves (44).

2. The method according to claim 1, further comprising the step of printing a position calibration pattern (30) suitable to correlate a printing nozzle (18) or group (42) of printing nozzles (18) with a column (38) printed from the printing nozzle (18) or group (42) of printing nozzles (18).

3. The method according to claim 1 or 2, wherein the correction curve (44) for each column (38) is derived from a comparison between the recorded color values and the corresponding nominal print density.

4. The method according to any of the preceding claims, wherein red, green and blue (RGB) color values are recorded for each nominal print density in each of the columns (38) and wherein the correction curves (44) for each of the columns (38) are derived from one of the RGB color values or a linear combination of the RGB color values, in particular their sum.

5. The method according to any of the preceding claims, wherein each of the columns (38) corresponds to an individually addressable group (42) of printing nozzles (18), in particular 16 nozzles (18), of a printing head (14), wherein the printing head (14) comprises a plurality of such groups (42), in particular 128.

6. The method according to any of the preceding claims, wherein the nominal print density describes the intended ink coverage on a substrate (22) from 0 % to 100 %.

7. The method according to claim 6, wherein the 2-dimensional pattern (32) is printed by subsequently applying ink with N discrete nominal print densities onto a web (20) and/or substrate (22), the densities starting with 0 % and ending with 100 % with steps of constant percentage in-between, wherein N is comprised between 20 and 65.

8. The method according to any of the preceding claims wherein at least the steps of the method according to claim 1 are repeated periodically and/or when a printing parameter, in particular a printing speed or ink batch, or the ambient temperature or humidity is changed.

9. The method according to any of the preceding claims, wherein the 2-dimensional pattern (32) is printed on a substrate (22) used for production.

10. An inkjet printer comprising
at least one printing head (14) provided with a plurality of nozzles (18) and adapted to print an ink;
a camera (24) located downstream of the at least one printing head (14) and adapted to record at least one color value of a pattern printed from the ink over the whole print width of the at least one printing head (14); and
a control unit (28) configured to execute a method according to any of the preceding claims.

11. The inkjet printer according to claim 10, wherein the camera (24) has three lines of pixels (26) in printing direction, each line (26) adapted to record a different color value, in particular RGB.

## Patentansprüche

1. Verfahren zum Verbessern der Konstanz der Farbdichte über die Druckbreite eines Tintenstrahldruckers (10), umfassend die Schritte zum:
- Drucken eines zweidimensionalen Musters (32), wobei das zweidimensionale Muster (32) über eine Druckbreite die gleiche nominale Druckdichte und in Druckrichtung unterschiedliche nominale Druckdichten aufweist;
- Aufteilen des zweidimensionalen Musters (32) in mehrere Spalten (38) über die Druckbreite;
**dadurch gekennzeichnet, dass** das Verfahren weiter die Schritte umfasst zum:
- Aufzeichnen mit einer Kamera (24) mindestens eines Farbwerts für jede nominale Druckdichte in jeder der Spalten (38);
- Ableiten einer Korrekturkurve (44) für jede Spalte (38) aus den aufgezeichneten Farbwerten; und
- Korrektur von Drucksignalen und/oder Druckmustern mit den Korrekturkurven (44).

2. Verfahren nach Anspruch 1, weiter umfassend den Schritt des Druckens eines Positionskalibrierungsmusters (30), das angepasst ist, eine Druckdüse (18) oder eine Gruppe (42) von Druckdüsen (18) mit einer Spalte (38) zu korrelieren, die von der Druckdüse (18) oder der Gruppe (42) von Druckdüsen (18) gedruckt wird.

3. Verfahren nach Anspruch 1 oder 2, wobei die Korrekturkurve (44) für jede Spalte (38) aus einem Vergleich zwischen den aufgezeichneten Farbwerten und der entsprechenden nominalen Druckdichte abgeleitet wird.

4. Verfahren nach einem der vorstehenden Ansprüche, wobei für jede nominale Druckdichte in jeder der Spalten (38) Rot-, Grün- und Blau-Farbwerte (RGB) aufgezeichnet werden und wobei die Korrekturkurven (44) für jede der Spalten (38) aus einem der RGB-Farbwerte oder einer linearen Kombination der RGB-Farbwerte, insbesondere deren Summe, abgeleitet werden.

5. Verfahren nach einem der vorstehenden Ansprüche, wobei jede der Spalten (38) einer einzeln adressierbaren Gruppe (42) von Druckdüsen (18), insbesondere 16 Düsen (18), eines Druckkopfes (14) entspricht, wobei der Druckkopf (14) eine Vielzahl solcher Gruppen (42), insbesondere 128, umfasst.

6. Verfahren nach einem der vorstehenden Ansprüche, wobei die nominale Druckdichte die beabsichtigte Tintendeckung auf einem Substrat (22) von 0 % bis 100 % beschreibt.

7. Verfahren nach Anspruch 6, wobei das zweidimensionale Muster (32) durch nachfolgendes Auftragen von Tinte mit N diskreten nominalen Druckdichten auf eine Bahn (20) und/oder ein Substrat (22) gedruckt wird, die Dichten beginnend mit 0 % und endend mit 100 % mit Schritten konstanter Prozentzahl dazwischen, wobei N zwischen 20 und 65 umfasst ist.

8. Verfahren nach einem der vorstehenden Ansprüche, wobei mindestens die Schritte des Verfahrens nach Anspruch 1 periodisch wiederholt werden und/oder wenn ein Druckparameter, insbesondere eine Druckgeschwindigkeit oder Tintencharge, oder die Umgebungstemperatur oder Luftfeuchtigkeit geändert wird.

9. Verfahren nach einem der vorstehenden Ansprüche, wobei das zweidimensionale Muster (32) auf ein zur Herstellung verwendetes Substrat (22) gedruckt wird.

10. Tintenstrahldrucker, umfassend
mindestens einen Druckkopf (14), der mit einer Vielzahl von Düsen (18) bereitgestellt und zum Drucken einer Tinte angepasst ist;
eine Kamera (24), die stromabwärts des mindestens einen Druckkopfes (14) angeordnet und dazu angepasst ist, mindestens einen Farbwert eines aus der Tinte gedruckten Musters über die gesamte Druckbreite des mindestens einen Druckkopfes (14) aufzuzeichnen; und
eine Steuereinheit (28), die dazu ausgelegt ist, ein Verfahren nach einem der vorstehenden Ansprüche auszuführen.

11. Tintenstrahldrucker nach Anspruch 10, wobei die Kamera (24) in Druckrichtung drei Zeilen von Pixeln (26) aufweist, wobei jede Zeile (26) dazu angepasst ist, einen anderen Farbwert, insbesondere RGB, aufzuzeichnen.

## Revendications

1. Procédé d'amélioration de la consistance de la densité de couleur sur la largeur d'impression d'une imprimante à jet d'encre (10) comprenant les étapes consistant à :
- imprimer un motif bidimensionnel (32), dans lequel le motif bidimensionnel (32) présente la même densité d'impression nominale sur une largeur d'impression et des densités d'impression nominales variables dans la direction d'impression ;
- diviser le motif bidimensionnel (32) en de multiples colonnes (38) sur la largeur d'impression ;
**caractérisé en ce que** le procédé comprend en outre les étapes consistant à :
- enregistrer avec une caméra (24) au moins une valeur de couleur pour chaque densité d'impression nominale dans chacune des colonnes (38) ;
- dériver une courbe de correction (44) pour chaque colonne (38) à partir des valeurs de couleur enregistrées ; et
- corriger des signaux d'impression et/ou motifs d'impression avec les courbes de correction (44).

2. Procédé selon la revendication 1, comprenant en outre l'étape consistant à imprimer un motif d'étalonnage de position (30) adapté pour corréler une buse d'impression (18) ou un groupe (42) de buses d'impression (18) avec une colonne (38) imprimée à partir de la buse d'impression (18) ou du groupe (42) de buses d'impression (18).

3. Procédé selon la revendication 1 ou 2, dans lequel la courbe de correction (44) pour chaque colonne (38) est dérivée d'une comparaison entre les valeurs de couleur enregistrées et la densité d'impression nominale correspondante.

4. Procédé selon l'une quelconque des revendications précédentes, dans lequel des valeurs de couleur rouge, vert et bleu (RVB) sont enregistrées pour chaque densité d'impression nominale dans chacune des colonnes (38) et dans lequel les courbes de correction (44) pour chacune des colonnes (38) sont dérivées d'une des valeurs de couleur RVB ou d'une combinaison linéaire des valeurs de couleur RVB, en particulier leur somme.

5. Procédé selon l'une quelconque des revendications précédentes, dans lequel chacune des colonnes (38) correspond à un groupe adressable individuellement (42) de buses d'impression (18), en particulier 16 buses (18), d'une tête d'impression (14), dans lequel la tête d'impression (14) comprend une pluralité de tels groupes (42), en particulier 128.

6. Procédé selon l'une quelconque des revendications précédentes, dans lequel la densité d'impression nominale décrit la couverture d'encre prévue sur un substrat (22) de 0 % à 100 %.

7. Procédé selon la revendication 6, dans lequel le motif bidimensionnel (32) est imprimé en appliquant ensuite de l'encre avec N densités d'impression nominales discrètes sur une toile (20) et/ou un substrat (22), les densités commençant par 0 % et se terminant par 100 % avec des étapes de pourcentage constant entre elles, dans lequel N est compris entre 20 et 65.

8. Procédé selon l'une quelconque des revendications précédentes, dans lequel au moins les étapes du procédé selon la revendication 1 sont répétées périodiquement et/ou lorsqu'un paramètre d'impression, en particulier une vitesse d'impression ou un lot d'encre, ou la température ou l'humidité ambiante, est modifié.

9. Procédé selon l'une quelconque des revendications précédentes, dans lequel le motif bidimensionnel (32) est imprimé sur un substrat (22) utilisé pour la production.

10. Imprimante à jet d'encre comprenant
au moins une tête d'impression (14) pourvue d'une pluralité de buses (18) et adaptée pour imprimer une encre ;
une caméra (24) située en aval de la au moins une tête d'impression (14) et adaptée pour enregistrer au moins une valeur de couleur d'un motif imprimé à partir de l'encre sur toute la largeur d'impression de la au moins une tête d'impression (14) ; et
une unité de commande (28) configurée pour exécuter un procédé selon l'une quelconque des revendications précédentes.

11. Imprimante à jet d'encre selon la revendication 10, dans laquelle la caméra (24) présente trois lignes de pixels (26) dans la direction d'impression, chaque ligne (26) étant adaptée pour enregistrer une valeur de couleur différente, en particulier RVB.
